# EUROPEAN PATENT SPECIFICATION

(11) **EP 3 499 004 B1**
(45) Date of publication and mention of the grant of the patent: **02.09.2020**
(21) Application number: 18199902.0
(22) Date of filing: 11.10.2018
(51) Int. Cl.: F02B 61/02

(54) **ENGINE AND STRADDLED VEHICLE WITH ENGINE**
MOTOR UND GRÄTSCHSITZFAHRZEUG MIT MOTOR
MOTEUR ET VÉHICULE À ENFOURCHER ÉQUIPÉ DE MOTEUR

(30) Priority: 13.12.2017 JP 2017238843
(43) Date of publication of application: 19.06.2019
(73) Proprietor: YAMAHA HATSUDOKI KABUSHIKI KAISHA, Iwata-shi, Shizuoka 438-8501 (JP)
(72) Inventor: KAWAKAMI, Satoshi, Iwata-shi, Shizuoka 438-8501 (JP)
(74) Representative: Grünecker Patent- und Rechtsanwälte PartG mbB

(56) References cited:
- EP-A1- 2 543 834
- WO-A1-2016/147915
- ES-A1- 2 163 994
- JP-A- H05 332 348
- US-A1- 2002 083 910
- US-A1- 2007 266 982

## Description

The present invention relates to an engine according to the preamble of the independent claim 1 and a straddled vehicle with an engine. Prior art document US 2002/0083910 A1 discloses such engine that comprises a crankcase, a crankshaft including a first shaft portion and a second shaft portion. The first shaft portion is disposed inside the crankcase and the second shaft portion is protruding from the crankcase. A power generator is provided including a rotor and a stator, the rotor being fixed to the second shaft portion, the stator being fixed to the crankcase. The stator includes a hole through which the second shaft portion is inserted. A seat is disposed between the crankcase and the stator. The seat is interposed between the crankcase and the stator while being pressed by the crankcase and the stator. The crankcase is filled with a lubricating oil for lubricating the crankshaft. A seal member is disposed between the second shaft portion and the crankcase to seal the lubricating oil in the crankcase. In particular, the crankcase according to said prior art is constituted by front and rear crankcase half bodies and lid plate. The lid plate fixed to the front and rear crankcase half bodies with a plurality of bolts close an opening. An O-ring is inserted between junction surfaces of both crankcase half bodies and the lid plate. The seal member provided as an oil seal in tight contact with an outer peripheral surface of the crankshaft is applied to a through hole of the lid plate. The stator is fixed to the lid plate with plural bolts. The rotor surrounds the stator. Accordingly, the lid plate serves as an attachment base of the stator.

In general, an engine for a straddled vehicle drives a power generator by a rotational force of a crankshaft. For example, JP 2014-240628 A describes a type of engine in which a rotor of a power generator is fixed to the right end of a crankshaft. Additionally, a stator of the power generator is fixed to the sidewall of a crankcase by fixation members such as bolts.

In recent years, increase in capacity of power generation has been demanded for the power generator. When the size of the power generator is increased to achieve increase in capacity of power generation, this results in a drawback of increase in magnetic noise to be generated in driving the power generator.

It has been considered that the magnetic noise is amplified by minute vibrations of the crankcase to which the power generator is attached. It has been conceived increase in stiffness of the sidewall of the crankcase to which the power generator is attached in order to reduce the magnetic noise in the aforementioned engine described in JP 2014-240628 A. However, when the thickness of the sidewall of the crankcase is increased to achieve increase in stiffness thereof, this results in a drawback of increase in weight of the engine.

Furthermore, when the thickness of the sidewall is increased, reduction in space for accommodating the power generator is concerned. Especially, when the power generator to be installed in the engine has a large size, reduction in space for accommodating the power generator possibly imposes restrictions on the layout of the power generator.

It is an object of the present invention to provide an engine and a straddled vehicle with an engine that achieve the following in an engine in which a power generator is installed, including inhibiting increase in weight of the engine, inhibiting deterioration in layout of the power generator, and reducing magnetic noise. According to the present invention said object is solved by an engine having the features of independent claim 1. Moreover, said object is solved by a straddled vehicle with an engine according to claim 14. Preferred embodiments are laid down in the dependent claims.

An engine according to an aspect includes a crankcase, a crankshaft, a power generator and a seat. The crankshaft includes a first shaft portion and a second shaft portion. The first shaft portion is disposed inside the crankcase. The second shaft portion protrudes from the crankcase. The power generator includes a rotor and a stator. The rotor is fixed to the second shaft portion. The stator is fixed to the crankcase, and includes a hole through which the second shaft portion is inserted. The seat is disposed between the crankcase and the stator. The seat, at least in part, is made of elastic material. The seat is interposed between the crankcase and the stator, while being pressed by the crankcase and the stator.

In the engine according to the present aspect, the seat is disposed between the crankcase and the stator, and at least in part, is made of elastic material. Therefore, minute vibrations of the crankcase can be inhibited by the seat in driving the power generator. In other words, vibrations to be transferred from the stator to the crankcase can be damped. Therefore, generation of magnetic noise can be inhibited, while increase in thickness of the crankcase can be inhibited. Accordingly, increase in weight of the engine can be inhibited, and simultaneously, magnetic noise can be reduced while deterioration in layout of the power generator can be inhibited.

The seat may include a base layer and a coating layer. The base layer may be made of metal. The coating layer may be made of the elastic material, and may coat the base layer. The seat herein includes the coating layer made of elastic material, whereby minute vibrations of the crankcase can be effectively inhibited in driving the power generator. Additionally, the seat includes the base layer made of metal, whereby deformation of the seat can be inhibited. Accordingly, the seat can be enhanced in durability. Additionally, positional precision of the stator can be kept high.

The crankcase may include a case body and a cover. The case body may include an opening. The cover may be provided separately from the case body, and may be attached to the opening. The stator may be attached to the cover. The seat may be interposed between the stator and the cover, while being pressed by the stator and the cover.

When the stator is attached to the cover provided separately from the case body, magnetic noise is likely to be generated because of lowness in stiffness of the cover. However, even in such a situation, with the seat being provided, generation of magnetic noise can be inhibited.

The cover may include a cover body and an attachment portion. The cover body may be attached to the case body so as to block off the opening. The attachment portion may include a shaft insertion hole through which the crankshaft is inserted. The stator may be attached to the attachment portion. The cover body may have a dome shape. The cover body herein has a dome shape, whereby the cover body can be enhanced in stiffness. Accordingly, generation of magnetic noise can be inhibited.

The power generator may be a starter-generator. A stator of the starter-generator is larger than that of a power generator without an engine start function. Because of this, when the stator of the starter-generator is fixed to the crankcase, magnetic noise is likely to be generated. However, even in such a situation, with the seat being provided, generation of magnetic noise can be inhibited.

The engine may further include a bolt fixing the stator to the crankcase. The seat may include a bolt insertion port through which the bolt is inserted. The seat can be herein disposed about the bolt, too. Therefore, it is possible to increase a pressure receiving area between the seat and the stator or between the seat and the crankcase. Accordingly, minute vibrations of the crankcase can be effectively inhibited by the seat in driving the power generator,

The seat may enclose an entire circumference of the bolt. It is herein possible to further increase the pressure receiving area between the seat and the stator or between the seat and the crankcase. Accordingly, minute vibrations of the crankcase can be more effectively inhibited by the seat in driving the power generator.

The crankcase may include a shaft insertion hole and a projection. The crankshaft may be inserted through the shaft insertion hole. The projection may be disposed in a region surrounding the shaft insertion hole. The seat may include a shaft insertion port and a projection insertion port. The crankshaft may be inserted through the shaft insertion port. The projection insertion port may be disposed in a region surrounding the shaft insertion port. The projection may be inserted into the projection insertion port. The projection is herein inserted into the projection insertion port, whereby the seat can be positioned with respect to the crankcase.

The crankcase may include a shaft insertion hole, an attachment surface and a protruding portion. The crankshaft may be inserted through the shaft insertion hole. The attachment surface may have a flat shape and may be disposed about the shaft insertion hole, The stator may be attached to the attachment surface. The protruding portion may be disposed on an edge of the shaft insertion hole. The protruding portion may protrude from the attachment surface in an axis direction of the crankshaft. The seat may include a shaft insertion port through which the crankshaft is inserted. The protruding portion may be inserted into the shaft insertion port. The protruding portion is herein inserted into the shaft insertion port, whereby the seat can be positioned with respect to the shaft insertion hole.

The crankcase may include a shaft insertion hole and an attachment surface. The crankshaft may be inserted through the shaft insertion hole. The attachment surface may have a flat shape and may be disposed about the shaft insertion hole. The stator may be attached to the attachment surface. The seat may be interposed between the stator and the attachment surface while being pressed by the stator and the attachment surface. Minute vibrations, transferred from the stator to the attachment surface of the crankcase, can be herein effectively inhibited by the seat in driving the power generator.

The crankcase may be filled with a lubricating oil for lubricating the crankshaft. The engine may further include a seal member. The seal member may be disposed between the second shaft portion and the crankcase to seal the lubricating oil in the crankcase. The sidewall of the crankcase can be herein reduced in thickness, whereby a sufficient volume of the lubricating oil can be easily and reliably contained in the crankcase, while deterioration in layout of the power generator can be inhibited.

### BRIEF DESCRIPTION OF THE DRAWINGS

FIG. 1 is a side view of a straddled vehicle according to a preferred embodiment.
FIG. 2 is a cross-sectional view of an engine according to the preferred embodiment.
FIG. 3 is an enlarged cross-sectional view of structures of a cover, a stator and their surrounding components in an engine.
FIG. 4 is a perspective view of the cover, a seat and the stator.
FIG. 5 is a view of the cover as seen in an axis direction.
FIG. 6 is a perspective view of the cover.
FIG. 7 is a view of the seat as seen in the axis direction.
FIG. 8 is a view of the cover and the seat as seen in the axis direction.
FIG. 9 is a cross-sectional view of the seat.
FIG. 10 is a cross-sectional view of an engine according to another preferred embodiment.

### DETAILED DESCRIPTION OF THE PREFERRED EMBODIMENTS

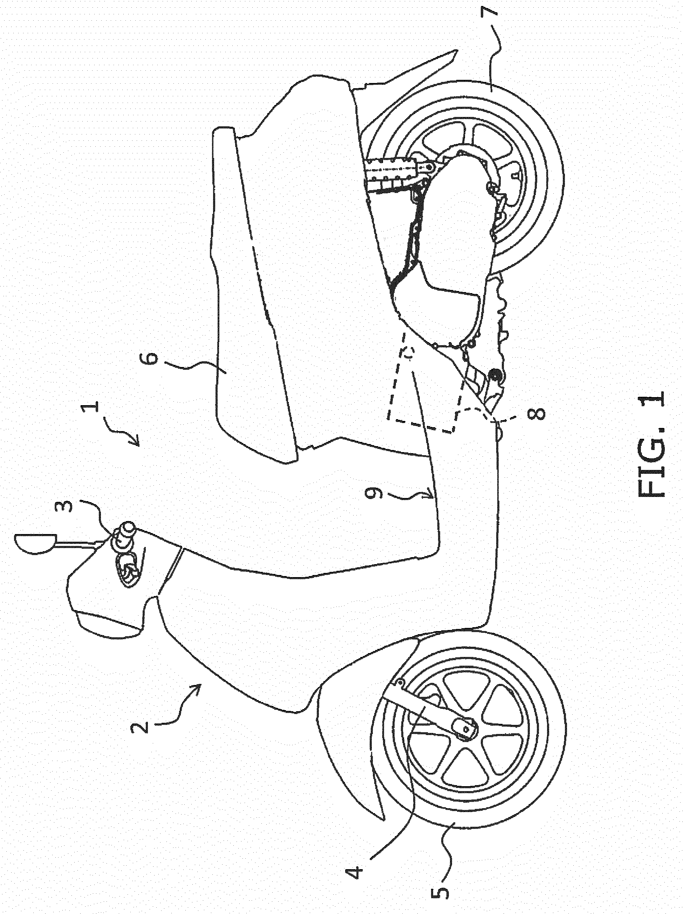

An engine according to a preferred embodiment will be hereinafter explained with reference to drawings. FIG. 1 is a side view of a straddled vehicle 1 in which an engine 8 according to the present preferred embodiment is installed. The straddled vehicle 1 according to the present preferred embodiment is a scooter-type vehicle. As shown in FIG. 1, the straddled vehicle 1 includes a vehicle body 2, a handle 3, a steering device 4, a front wheel 5, a seat 6, a rear wheel 7 and the engine 8.

The handle 3 is coupled to the front wheel 5 through the steering device 4. The seat 6 is supported by the vehicle body 2. A footboard 9 is disposed forward of and below the seat 6. The footboard 9 is a portion for allowing a rider to put his/her feet thereon. The footboard 9 has a flat shape. The footboard 9 may be shaped such that the vehicle width directional middle thereof protrudes in an upwardly convex shape.

The engine 8 is disposed below the seat 6. The engine 8 is pivotably supported by the vehicle body 2. The structure of the engine 8 will be hereinafter explained in detail. It should be noted that in the following explanation, up, down, right, left, front and rear directions are defined as meaning the up, down, right, left, front and rear directions, respectively, based on a condition that the engine 8 is installed in the straddled vehicle 1.

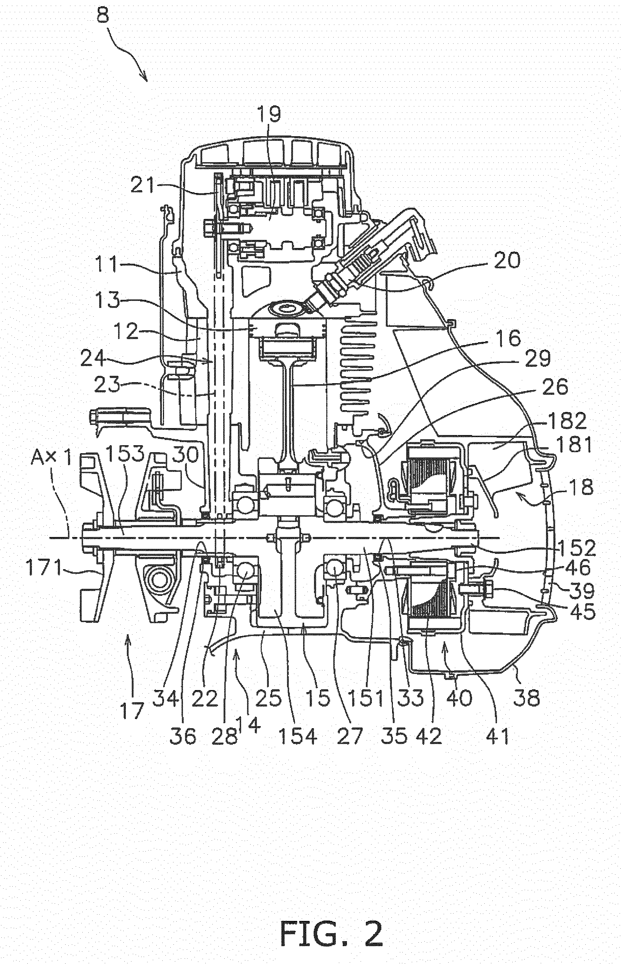

FIG. 2 is a cross-sectional view of the engine 8. As shown in FIG. 2, the engine 8 includes a cylinder head 11, a cylinder 12, a piston 13, a crankcase 14 and a crankshaft 15. A spark plug 20 is attached to the cylinder head 11. A camshaft 19 is disposed inside the cylinder head 11. A first cam chain sprocket 21 is connected to the camshaft 19.

The cylinder head 11 is connected to the cylinder 12. The cylinder 12 is connected to the crankcase 14. It should be noted that in the present specification, the term "connection" is not limited to direct connection, and encompasses indirect connection. Additionally, the term "connection" is not limited to a condition that separate members are fixed to each other, and encompasses a condition that a plurality of portions in an integrated member continue to each other.

The piston 13 is disposed inside the cylinder 12. The crankshaft 15 is connected to the piston 13 though a connecting rod 16. The crankshaft 15 is accommodated in the crankcase 14, and is rotated about an axis Ax1 of the crankshaft 15. It should be noted that in the following explanation, the term "axis direction" is defined as meaning the extending direction of the axis Ax1 of the crankshaft 15.

The crankshaft 15 includes a first shaft portion 151, a second shaft portion 152 and a third shaft portion 153. The first shaft portion 151 is located between the second shaft portion 152 and the third shaft portion 153, and is disposed inside the crankcase 14. The first shaft portion 151 includes a crank web 154 protruding in the radial direction. The crank web 154 is connected to the connecting rod 16.

The second shaft portion 152 protrudes from the crankcase 14 to one side in the axis direction. The third shaft portion 153 protrudes from the crankcase 14 to the other side in the axis direction. The third shaft portion 153 is coupled to a drive pulley 171 of a transmission 17. A second cam chain sprocket 22 is connected to the third shaft portion 153.

A cam chain 23 is wound about the first and second cam chain sprockets 21 and 22. The cylinder head 11, the cylinder 12 and the crankcase 14 are provided with a cam chain compartment 24 in the interior thereof. The cam chain 23 is disposed in the cam chain compartment 24.

The crankcase 14 includes a first shaft insertion hole 33 and a second shaft insertion hole 34. The second shaft portion 152 is inserted through the first shaft insertion hole 33. The third shaft portion 153 is inserted through the second shaft insertion hole 34. A first seal member 35 is attached to the first shaft insertion hole 33. The first seal member 35 is disposed between the second shaft portion 152 and the crankcase 14.

The second shaft insertion hole 34 is provided in a sidewall 30 of a case body 25. The sidewall 30 delimits the cam chain compartment 24. A second seal member 36 is attached to the second shaft insertion hole 34. The second seal member 36 is disposed between the third shaft portion 153 and the crankcase 14. Lubricating oil is contained in the crankcase 14 in order to lubricate the crankshaft 15. The first and second seal members 35 and 36 seal the lubricating oil contained in the crankcase 14.

The engine 8 includes a cooling fan 18. The cooling fan 18 is attached to the second shaft portion 152 of the crankshaft 15. The cooling fan 18 is disposed to be concentric to the crankshaft 15. The cooling fan 18 is a centrifugal fan that feeds air in centrifugal directions. The cooling fan 18 includes a fan body 181 having a disc shape and a plurality of blade portions 182. The plural blade portions 182 are disposed on the fan body 181.

The engine 8 includes a housing member 38. The housing member 38 is attached to the crankcase 14. The housing member 38 covers the cooling fan 18. The cooling fan 18 is disposed in an accommodation space between the crankcase 14 and the housing member 38. The housing member 38 includes a vent hole 39. The vent hole 39 overlaps the cooling fan 18 in the axis direction.

The crankcase 14 includes the case body 25 and a cover 26. The crank web 154 is disposed inside the case body 25. The case body 25 includes the aforementioned cam chain compartment 24. A first bearing 27 and a second bearing 28 are attached to the case body 25. The first and second bearings 27 and 28 support the crankshaft 15 such that the crankshaft 15 is rotatable.

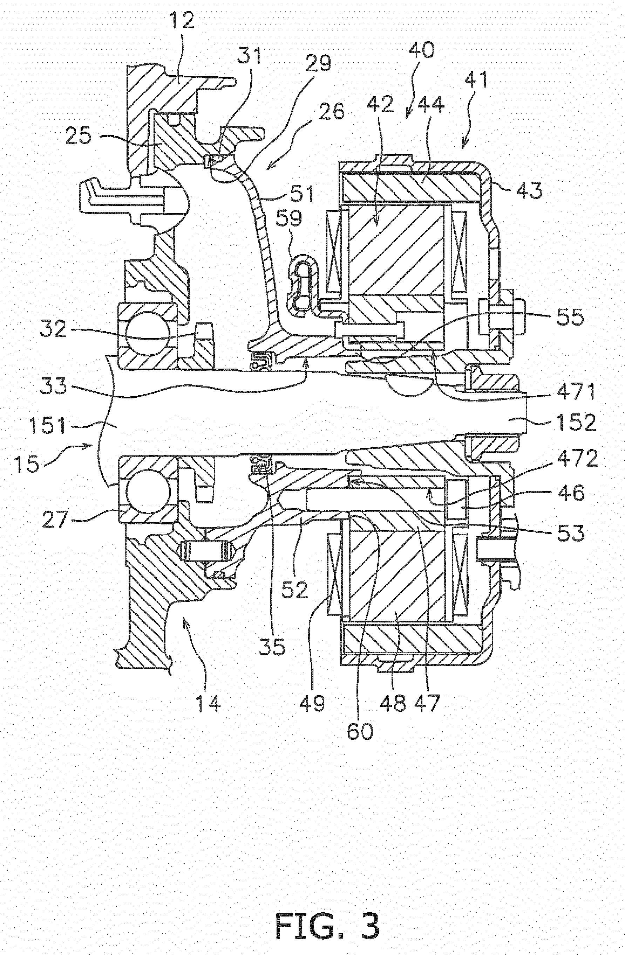

The cover 26 is provided separately from the case body 25. The cover 26 is attached to the case body 25. FIG. 3 is an enlarged cross-sectional view of the surroundings of the cover 26. As shown in FIG. 3, the case body 25 includes an opening 29. The cover 26 blocks off the opening 29 of the case body 25. A seal member 31 seals between the cover 26 and the case body 25. The cover 26 includes the aforementioned first shaft insertion hole 33.

An oil pump gear 32 is connected to the first shaft portion 151. The oil pump gear 32 is disposed between the first bearing 27 and the cover 26. An oil pump (not shown in the drawings) is connected to the oil pump gear 32. Detaching the cover 26 from the case body 25 makes the oil pump gear 32 and the oil pump accessible through the opening 29.

The engine 8 includes a power generator 40. The power generator 40 is disposed between the crankcase 14 and the cooling fan 18. Detailedly, the power generator 40 is disposed between the cover 26 and the cooling fan 18. The power generator 40 generates electric power when driven by rotation of the crankshaft 15, and charges a battery (not shown in the drawings). Additionally, the power generator 40 functions as a starter motor that starts the engine 8 by electric power to be supplied thereto from the battery. In other words, the power generator 40 is a starter-generator. The power generator 40 may function as an assist motor that assists the driving force of the engine 8.

The power generator 40 includes a rotor 41 and a stator 42. The rotor 41 is fixed to the second shaft portion 152 of the crankshaft 15, and is rotated together with the crankshaft 15. The rotor 41 includes a rotor core 43 and a permanent magnet 44. The rotor core 43 has a tubular shape and is opened toward the crankcase 14. The permanent magnet 44 is attached to the inner peripheral surface of the rotor core 43. As shown in FIG. 2, the aforementioned cooling fan 18 is fixed to the rotor 41 by at least one bolt 45.

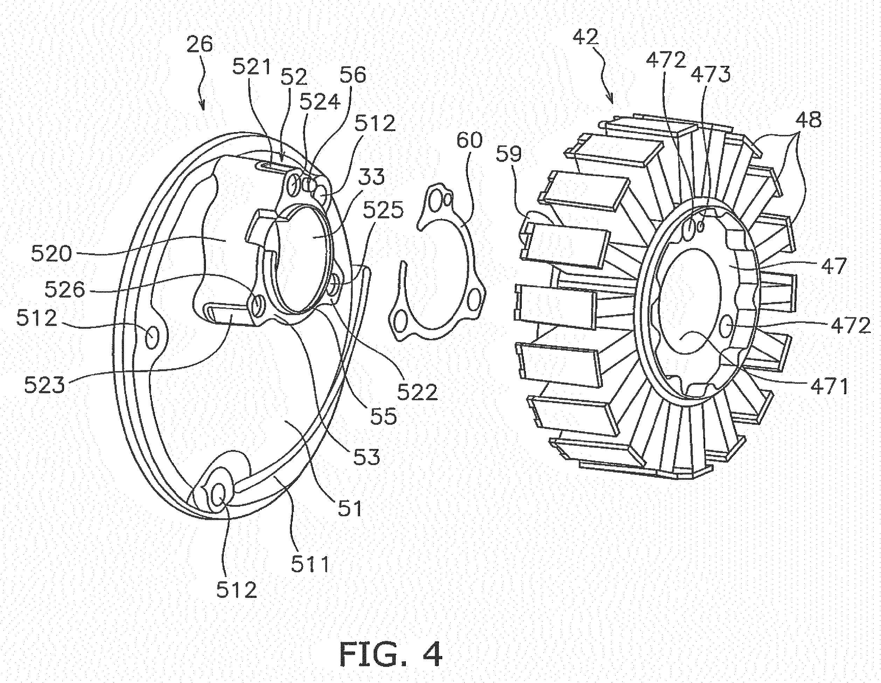

The stator 42 is fixed to the crankcase 14. The stator 42 is opposed to the rotor 41 in the radial direction of the stator 42. As shown in FIG. 3, the stator 42 is fixed to the cover 26 by bolts 46. FIG. 4 is a perspective view of the stator 42 and the cover 26. As shown in FIG. 4, the stator 42 includes a stator core 47 and a plurality of teeth 48. It should be noted that in the drawings, reference numeral 48 is assigned to only part of the plural teeth 48 without being assigned to the other teeth 48.

The stator core 47 includes a hole 471. The second shaft portion 152 is inserted through the hole 471. The stator core 47 includes a plurality of holes 472 through which the bolts 46 are inserted. The plural teeth 48 are attached to the stator core 47.

The plural teeth 48 extend from the stator core 47 in the radial directions of the stator 42. The plural teeth 48 are disposed away from each other at gaps in the circumferential direction of the stator 42. As shown in FIG. 3, the stator 42 includes a stator coil 49. The stator coil 49 is wound about the plural teeth 48.

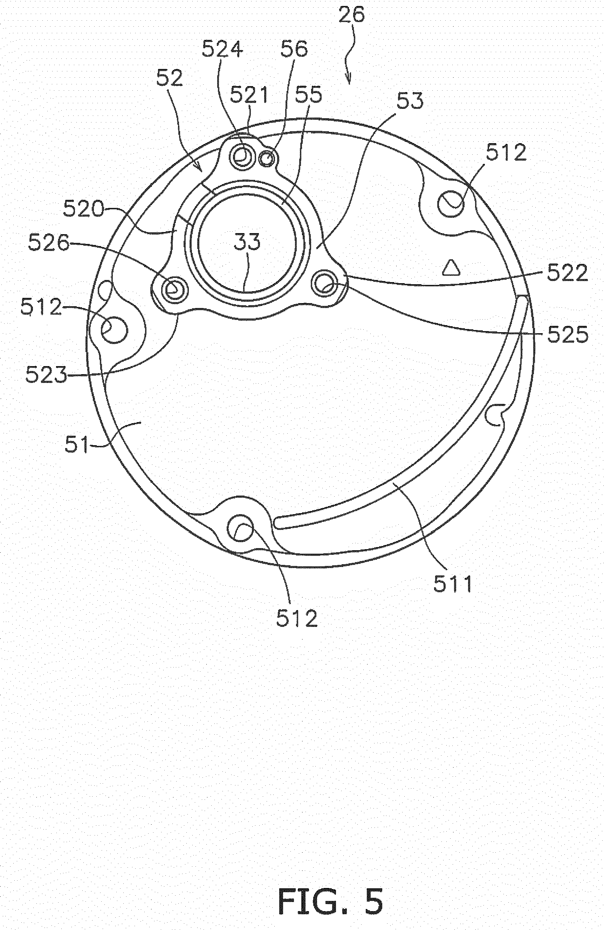

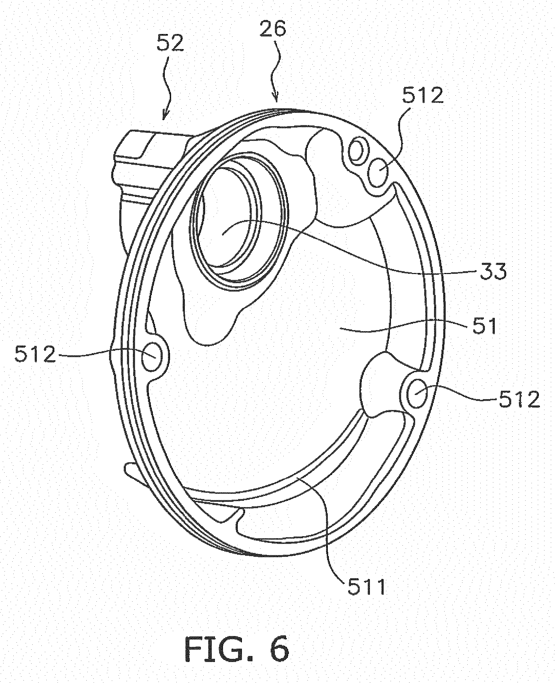

FIG. 5 is a view of the cover 26 as seen in the axis direction. FIG. 6 is a perspective view of the back side of the cover 26. As shown in FIGS. 4 to 6, the cover 26 includes a cover body 51 and an attachment portion 52. The cover body 51 is attached to the case body 25, and blocks off the opening 29. The cover body 51 is made in the shape of a dome bulging in the axis direction. The cover body 51 has a contour of a circular shape as seen in the axis direction. It should be noted that the circular shape is not limited to a true circular shape, and encompasses an approximately circular shape.

The cover body 51 includes a rib 511. The rib 511 extends in a direction intersecting the radial direction of the cover body 51. The rib 511 extends along part of the edge of the cover body 51. The cover body 51 Includes a plurality of holes 512. The plural holes 512 penetrate the cover body 51. Bolts (not shown in the drawings) are inserted through the plural holes 512, respectively, in order to fix the cover body 51 to the case body 25.

The attachment portion 52 protrudes from the cover body 51 in the axis direction. As seen in the axis direction, the attachment portion 52 is disposed to be eccentric from the center of the cover body 51. The attachment portion 52 includes the first shaft insertion hole 33. As seen in the axis direction, the first shaft insertion hole 33 is disposed to be eccentric from the center of the cover body 51.

The aforementioned stator 42 is attached to the attachment portion 52. The attachment portion 52 includes an attachment surface 53. The attachment surface 53 is disposed in the surroundings of the first shaft insertion hole 33. The attachment surface 53 has a flat shape. The attachment surface 53 is a plane perpendicular to the axis direction. The stator 42 is attached to the attachment surface 53.

The attachment portion 52 includes a body 520 and a plurality of bosses 521 to 523. The body 520 is disposed in the surroundings of the first shaft insertion hole 33. The plural bosses 521 to 523 protrude from the body 520 in the radial directions of the first shaft insertion hole 33. Detailedly, the attachment portion 52 includes three bosses 521 to 523. It should be noted that the number of the bosses 521 to 523 is not limited to three, and alternatively, may be less than three or may be greater than three. The bosses 521 to 523 are provided with holes 524 to 526, respectively. As seen in the axis direction, the holes 524 to 526, provided in the bosses 521 to 523, are disposed in the surroundings of the first shaft insertion hole 33. The plural bolts 46 are inserted through the holes 524 to 526, respectively, in order to fix the stator 42 to the cover 26.

The attachment portion 52 includes a protruding portion 55. The protruding portion 55 is disposed on the edge of the first shaft insertion hole 33. The protruding portion 55 has a tubular shape and protrudes from the attachment surface 53 in the axis direction of the crankshaft 15. The protruding portion 55 is inserted into a hole 471 of the stator 42. Accordingly, the stator 42 is positioned in the radial direction.

The attachment portion 52 includes a projection 56. The projection 56 is disposed in a region surrounding the first shaft insertion hole 33. The projection 56 sticks out from the attachment surface 53 in the axis direction. As shown in FIG. 4, the stator core 47 includes a hole 473. The projection 56 is inserted into the hole 473 of the stator core 47. Accordingly, the stator 42 is positioned in the circumferential direction. The projection 56 may be a pin member fixed to the attachment portion 52 as a member provided separately from the attachment portion 52. Alternatively, the projection 56 may be integrated with the attachment portion 52.

As shown in FIGS. 3 and 4, a seat 60 is disposed between the crankcase 14 and the stator 42. The seat 60 is interposed between the crankcase 14 and the stator 42, while being pressed by the both. Detailedly, the seat 60 is interposed between the attachment surface 53 of the cover 26 and the stator 42, while being pressed by the both.

The seat 60 makes contact with the crankcase 14 and the stator 42. Detailedly, the seat 60 makes contact with the attachment surface 53 of the cover 26 and the stator 42. Thus, the stator 42 is fixed to the crankcase 14 through the seat 60. The stator 42 presses the seat 60 onto the crankcase 14.

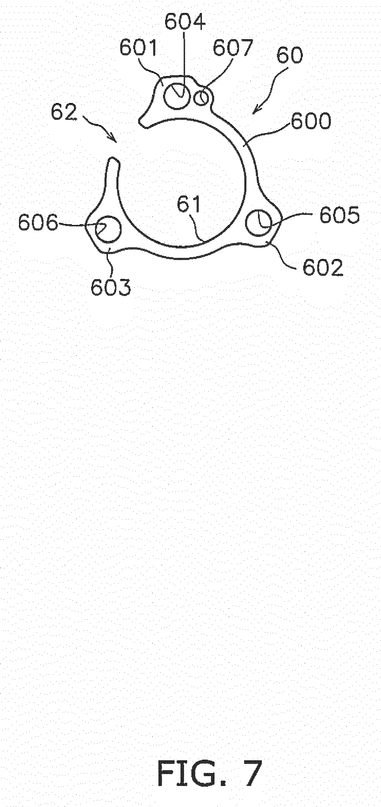

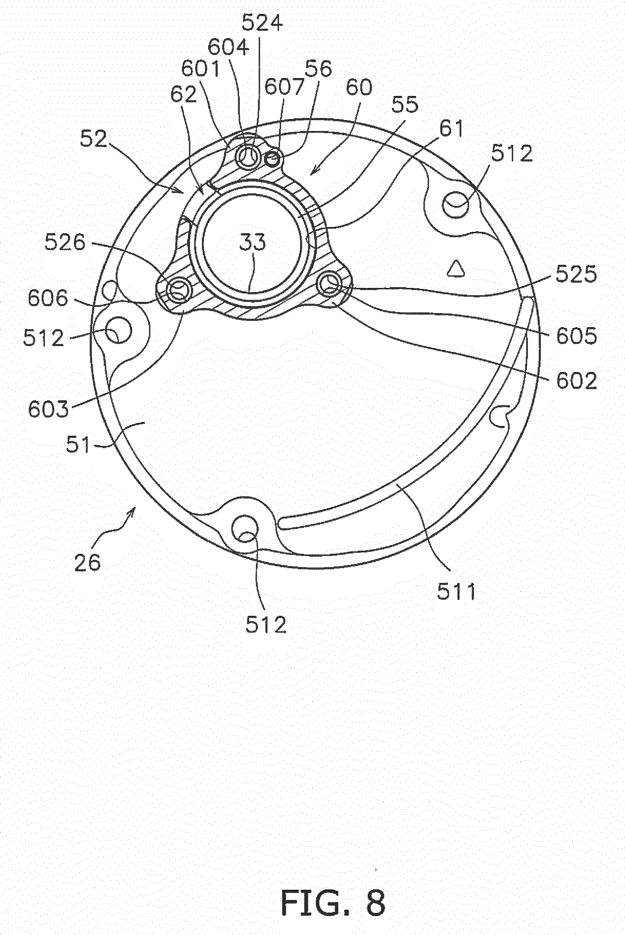

FIG. 7 is a view of the seat 60 as seen in the axis direction. FIG. 8 is a view of the seat 60 attached to the cover 26. It should be noted that in FIG. 8, the seat 60 is illustrated with hatching for easy understanding.

As shown in FIG. 8, the seat 60 overlaps the attachment surface 53 of the attachment portion 52 as seen in the axis direction. The seat 60 has a shape matched with the attachment surface 53 as seen in the axis direction. It should be noted that the seat 60, at least in part, may have a shape different from the attachment surface 53 as seen in the axis direction.

As shown in FIG. 7, the seat 60 includes a shaft insertion port 61. The shaft insertion port 61 is disposed to be concentric to the first shaft insertion hole 33 of the cover 26. The protruding portion 55 of the attachment portion 52 is inserted into the shaft insertion port 61. Accordingly, the seat 60 is positioned in the radial direction.

The shaft insertion port 61 is made in the shape of a circle that is cut out in part. In other words, the seat 60 is provided with a cutout 62 continuing to the shaft insertion port 61. As shown in FIGS. 3 and 4, a bracket 59 is attached to the stator core 47. The bracket 59 is disposed between the stator 42 and the cover 26. The bracket 59 supports a harness (not shown in the drawings) to be connected to the stator coil 49. The cutout 62 is provided to avoid contact with the bracket 59. It should be noted that the shaft insertion port 61 may be made in the shape of a circle that the entire circumference thereof is continuous without being provided with the cutout 62.

The seat 60 includes a body 600 and a plurality of bosses 601 to 603. The body 600 of the seat 60 has a shape matched with the body 520 of the attachment portion 52. The body 600 of the seat 60 includes the shaft insertion port 61. The plural bosses 601 to 603 of the seat 60 have shapes matched with the plural bosses 521 to 523 of the attachment portion 52.

The plural bosses 601 to 603 of the seat 60 include bolt insertion ports 604 to 606 that the bolts 46 are inserted therethrough, respectively. The bolt insertion ports 604 to 606 are disposed in correspondence with the holes 524 to 526 of the attachment portion 52, respectively. Each of the bolt insertion ports 604 to 606 is made in the shape of a circle that the entire circumference thereof is continuous. Therefore, the seat 60 is disposed to enclose the entire circumference of each bolt 46. It should be noted that each of the bolt insertion ports 604 to 606 may be made in the shape of a circle that is cut out in part.

The seat 60 includes a projection insertion port 607. The projection insertion port 607 is disposed in a region surroundings the shaft insertion port 61. The projection insertion port 607 is disposed in correspondence with the projection 56 of the attachment portion 52. The projection 56 is inserted into the projection insertion port 607. Accordingly, the seat 60 is positioned in the circumferential direction.

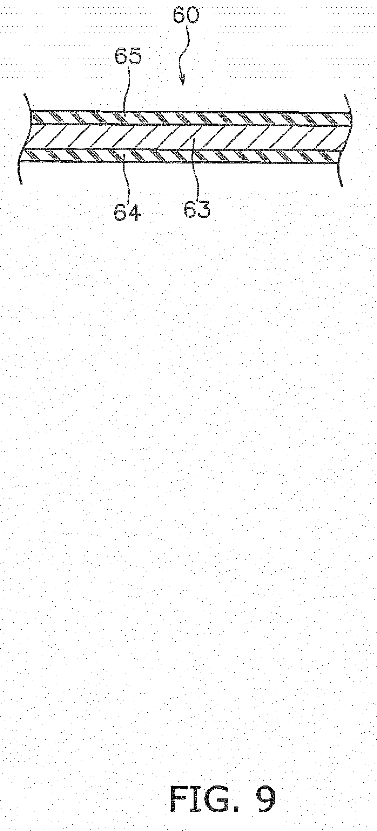

The seat 60, at least in part, is made of elastic material. The seat 60 is a sheet member. FIG. 9 is a diagram showing a cross section of the seat 60. As shown in FIG. 9, the seat 60 includes a base layer 63 and coating layers 64 and 65. The base layer 63 is made of metal. The base layer 63 is made of, for instance, stainless steel. It should be noted that the material, of which the base layer 63 is made, is not limited to stainless steel, and may be another metal such as aluminum. The coating layers 64 and 65 coat the base layer 63. The coating layers 64 and 65 are made of elastic material. The coating layers 64 and 65 are made of, for instance, rubber, but alternatively, may be made of another elastic material such as resin material. In other words, the seat 60 may be a damping member. In the present preferred embodiment, the seat 60 is made of sheet material for fabricating an engine gasket.

In the engine 8 according to the present preferred embodiment explained above, the seat 60 is disposed between the crankcase 14 and the stator 42. Therefore, minute vibrations of the crankcase 14 can be inhibited by the seat 60 in driving the power generator 40. In other words, vibrations to be transferred from the stator 42 to the crankcase 14 can be attenuated. Therefore, generation of magnetic noise can be inhibited, while increase in thickness of the crankcase 14 can be inhibited. Accordingly, increase in weight of the engine 8 can be inhibited, and simultaneously, magnetic noise can be reduced while deterioration in layout of the power generator 40 can be inhibited.

Especially, as with the aforementioned preferred embodiment, when the stator 42 is attached to the cover 26 provided separately from the case body 25, magnetic noise is likely to be generated because of lowness in stiffness of the cover 26. However, with the seat 60 being provided, generation of magnetic noise can be inhibited.

Additionally, as with the aforementioned preferred embodiment, when the power generator 40 is the starter-generator, the stator 42 is larger than a stator of a power generator without an engine start function. When the stator 42, having a relatively large size, is fixed to the crankcase 14, magnetic noise is likely to be generated. However, even in such a situation, with the seat 60 being provided, generation of magnetic noise can be inhibited.

The seat 60 includes the base layer 63 made of metal and the coating layers 64 and 65 made of elastic material. Therefore, in driving the power generator 40, minute vibrations of the crankcase 14 can be effectively inhibited by the coating layers 64 and 65. Additionally, the seat 60 includes the base layer 63 made of metal, whereby deformation of the seat 60 can be inhibited. The seat 60 can be thereby enhanced in durability. Also, positional precision of the stator 42 can be kept high.

The cover body 51 is made in the shape of a dome, whereby the cover body 51 can be enhanced in stiffness. Accordingly, generation of magnetic noise can be inhibited.

The seat 60 includes the bolt insertion ports 604 to 606 through which the bolts 46 are inserted, respectively. In other words, the seat 60 is disposed about the bolts 46, too. Therefore, it is possible to increase a pressure receiving area between the seat 60 and the stator 42 or between the seat 60 and the crankcase 14. Accordingly, in driving the power generator 40, minute vibrations of the crankcase 14 can be effectively inhibited by the seat 60.

Furthermore, the seat 60 encloses the entire circumference of each bolt 46. Therefore, it is possible to further increase the pressure receiving area between the seat 60 and the stator 42 or between the seat 60 and the crankcase 14. Accordingly, in driving the power generator 40, minute vibrations of the crankcase 14 can be more effectively inhibited by the seat 60.

The attachment portion 52 is provided with the projection 56, and the projection 56 is inserted into the projection insertion port 607 of the seat 60. Accordingly, the seat 60 can be positioned with respect to the crankcase 14. Therefore, attachment of the seat 60 is made easy.

The attachment portion 52 is provided with the protruding portion 55, and the protruding portion 55 is inserted into the shaft insertion port 61 of the seat 60. Accordingly, the seat 60 can be positioned with respect to the first shaft insertion hole 33. Therefore, attachment of the seat 60 is made easy.

One preferred embodiment has been explained above. However, the present teaching is not limited to the aforementioned preferred embodiment, and a variety of changes can be made without departing from the gist of the present teaching.

The straddled vehicle is not limited to a scooter-type vehicle, and alternatively, may be a moped or a sport-type vehicle. The straddled vehicle is not limited to a motorcycle, and alternatively, may be an all-terrain vehicle or a snowmobile. The number of front wheels is not limited to one, and alternatively, may be two or greater. The number of rear wheels is not limited to one, and alternatively, may be two or greater.

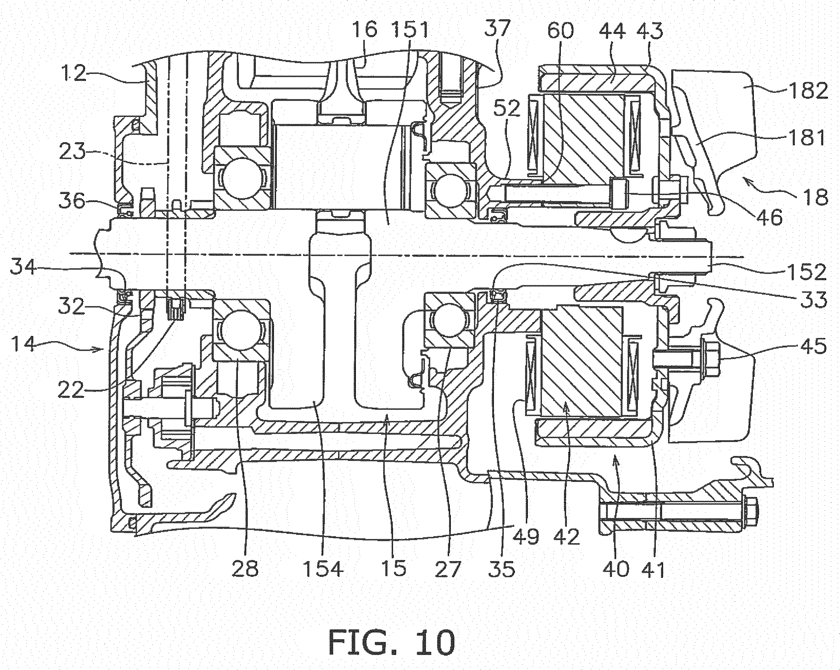

The structure inside the engine 8 may be changed. For example, as shown in FIG. 10, the crankcase 14 may include, instead of the cover 26, a sidewall 37 integrated with the case body 25. The stator 42 may be attached to the sidewall 37. In this case, the attachment portion 52 may be provided on the sidewall 37. The seat 60 may be interposed between the sidewall 37 and the stator 42, while in contact with the sidewall 37 and the stator 42.

The cover 26 may be changed in shape. For example, as seen in the axis direction, the contour of the cover 26 may have any suitable shape other than a circular shape. The first shaft insertion hole 33 may be changed in position. The shape of the cover 26 is not limited to a dome shape, and alternatively, may be a flat shape. The rib 511 may be omitted from the cover 26.

The seat 60 may be changed in shape. For example, the seat 60 may be smaller than the attachment surface 53. The bolt insertion ports 604 to 606 may be omitted from the seat 60. The projection insertion port 607 may be omitted from the seat 60. Additionally, the base layer 63 may be omitted from the seat 60, and thus, the entirety of the seat 60 may be made of elastic material. Alternatively, one of the coating layers 64 and 65 may be omitted from the seat 60 without omitting the base layer 63 therefrom.

The attachment portion 52 may be changed In position or shape. For example, the bosses 521 to 523 may be changed in number. Alternatively, the bosses 521 to 523 may be omitted. The projection 56 may be changed in position. Alternatively, the projection 56 may be omitted. The protruding portion 55 may be changed in shape. The protruding portion 55 may be omitted.

The seat 60 may make contact with the crankcase 14 and the stator 42 through another structure (e.g., a washer made of metal, a gasket made of paper, etc.). In other words, the seat 60 may be pressed onto the crankcase 14 and the stator 42 through another structure.

## Claims

1. An engine comprising:
a crankcase (14);
a crankshaft (15) including a first shaft portion (151) and a second shaft portion (152),
the first shaft portion (151) being disposed inside the crankcase (14), the second shaft portion (152) protruding from the crankcase (14);
a power generator (40) including a rotor (41) and a stator (42), the rotor (41) being fixed to the second shaft portion (152), the stator (42) being fixed to the crankcase (14), the stator (42) including a hole through which the second shaft portion (152) is inserted; and
a seat (60) disposed between the crankcase (14) and the stator (42), wherein
the seat (60) is interposed between the crankcase (14) and the stator (42) while being pressed by the crankcase (14) and the stator (42), and
the crankcase (14) is filled with a lubricating oil for lubricating the crankshaft (15),
the engine further comprising:
a seal member (35,36) disposed between the second shaft portion (152) and the crankcase (14) to seal the lubricating oil in the crankcase (14), and
the seat (60) being at least in part made of elastic material.

2. The engine according to claim 1, **characterized in that** the stator (42) is fixed to the crankcase (14) through the seat (60).

3. The engine according to claim 1 or 2, **characterized in that** the seat (60) includes a base layer (63) and a coating layer (64,65), the base layer (63) being made of metal, the coating layer (64,65) being made of the elastic material, the coating layer (64,65) coating the base layer (63).

4. The engine according to any of claims 1 to 3, **characterized in that** the crankcase (14) includes
a case body (25) including an opening (29), and
a cover (26) provided separately from the case body (25), the cover (26) being attached to the opening (29),
the stator (42) is attached to the cover (26), and
the seat (60) is interposed between the stator (42) and the cover (26) while being pressed by the stator (42) and the cover (26).

5. The engine according to claim 4, **characterized in that** the cover (26) includes
a cover body (51) attached to the case body (25) so as to block off the opening (29), and
an attachment portion (52) to which the stator (42) is attached, the attachment portion (52) including a shaft insertion hole (33,34) through which the crankshaft (15) is inserted, and
the cover body (51) has a dome shape.

6. The engine according to any of claims 1 to 5, **characterized in that** the power generator (40) is a starter-generator.

7. The engine according to any of claims 1 to 6, further comprising:
a bolt (46) fixing the stator (42) to the crankcase (14), wherein
the seat (60) includes a bolt insertion port (604 to 606) through which the bolt (46) is inserted.

8. The engine according to claim 7, **characterized in that** the seat (60) encloses an entire circumference of the bolt (46).

9. The engine according to any of claims 1 to 8, **characterized in that** the crankcase (14) includes
a shaft insertion hole (33,34) through which the crankshaft (15) is inserted, and
a projection (56) disposed in a region surrounding the shaft insertion hole (33,34), and the seat (60) includes
a shaft insertion port (61) through which the crankshaft (15) is inserted, and
a projection insertion port (607) into which the projection (56) is inserted, the projection insertion port (607) being disposed in a region surrounding the shaft insertion port (61).

10. The engine according to any of claims 1 to 9, **characterized in that** the crankcase (14) includes an attachment surface (53) to which the stator (42) is attached.

11. The engine according to claim 10, **characterized in that the** crankcase (14) includes a shaft insertion hole (33,34) through which the crankshaft (15) is inserted, the attachment surface (53) having a flat shape, the attachment surface (53) being disposed about the shaft insertion hole (33,34).

12. The engine according to claim 11, **characterized in that** the crankcase (14) includes a protruding portion (55) disposed on an edge of the shaft insertion hole (33,34), the protruding portion (55) protruding from the attachment surface (53) in an axis direction of the crankshaft (15),
the seat (60) includes a shaft insertion port (61) through which the crankshaft (15) is inserted, and
the protruding portion (55) is inserted into the shaft insertion port (61).

13. The engine according to any of claims 10 to 12, **characterized in that** the seat (60) is interposed between the stator (42) and the attachment surface (53) while being pressed by the stator (42) and the attachment surface (53).

14. A straddled vehicle in which an engine (8) according to according to any of claims 1 to 13 is installed.

## Patentansprüche

1. Ein Motor, der umfasst:
ein Kurbel-Gehäuse (14);
eine Kurbel-Welle (15), die einen ersten Wellen-Abschnitt (151) und einem zweiten Wellen-Abschnitt (152) beinhaltet, der erste Wellen-Abschnitt (151) ist innerhalb des Kurbel-Gehäuses (14) angeordnet, und der zweite Wellen-Abschnitt (152) steht aus dem Kurbel-Gehäuse (14) vor;
einen Leistungs-Generator (40), der einen Rotor (41) und einem Stator (42) beihaltet,
der Rotor (41) ist an dem zweiten Wellen-Abschnitt (152) fixiert, der Stator (42) ist an dem Kurbel-Gehäuse (14) fixiert, der Stator (42) beinhaltet ein Loch, durch das der zweite Wellen-Abschnitt (152) eingesetzt ist; und einen Sitz (60), der zwischen dem Kurbel-Gehäuse (14) und dem Stator (42) angeordnet ist, wobei der Sitz (60) zwischen dem Kurbel-Gehäuse (14) und dem Stator (42) zwischengesetzt ist, während er durch das Kurbel-Gehäuse (14) und den Stator (42) gepresst ist, und
das Kurbel-Gehäuse (14) mit einem Schmieröl zur Schmierung der Kurbel-Welle (15) gefüllt ist,
der Motor umfasst ferner:
ein Dichtungs-Element (35, 36), das zwischen dem zweiten Wellen-Abschnitt (152) und dem Kurbel-Gehäuse (14) angeordnet ist, um das Schmieröl in dem Kurbel-Gehäuse (14) abzudichten, und der Sitz (60) zumindest teilweise aus elastischem Material besteht.

2. Der Motor nach Anspruch 1, **dadurch gekennzeichnet, dass** der Stator (42) durch den Sitz (60) am Kurbel-Gehäuse (14) befestigt ist.

3. Motor nach Anspruch 1 oder 2, **dadurch gekennzeichnet, dass** der Sitz (60) eine Basis-Schicht (63) und eine Überzugs-Schicht (64, 65) beinhaltet, die Basis-Schicht (63) aus Metall gemacht ist, die Überzugs-Schicht (64, 65) aus dem elastischen Material gemacht ist, die Überzugs-Schicht (64, 65) die Basis-Schicht (63) überzieht.

4. Der Motor nach einem der Ansprüche 1 bis 3, **dadurch gekennzeichnet, dass** das Kurbel-Gehäuse (14) beinhaltet
einen Gehäuse-Körper (25), der eine Öffnung (29) beinhaltet, und
einen Abdeckung (26), die getrennt vom Gehäuse-Körper (25) vorgesehen ist, die Abdeckung (26) an der Öffnung (29) angebracht ist,
der Stator (42) an der Abdeckung (26) angebracht ist, und
der Sitz (60) zwischen dem Stator (42) und der Abdeckung (26) zwischengesetzt ist, während er durch den Stator (42) und die Abdeckung (26) gepresst ist.

5. Der Motor nach Anspruch 4, **dadurch gekennzeichnet, dass** die Abdeckung (26) beinhaltet
einem Abdeck-Körper (51), der am Gehäuse-Körper (25) befestigt ist, so dass er die Öffnung (29) blockiert, und
einen Anbringungs-Abschnitt (52), an dem der Stator (42) angebracht ist, der Anbringungs-Abschnitt (52) beinhaltet ein Wellen-Einsetz-Loch (33, 34), durch das die Kurbel-Welle (15) eingesetzt ist, und
der Abdeck-Körper (51) hat eine Kuppelform.

6. Der Motor nach einem der Ansprüche 1 bis 5, **dadurch gekennzeichnet, dass** der Leistungs-Generator (40) ein Starter-Generator ist.

7. Der Motor gemäß einem der Ansprüche 1 bis 6, der ferner umfasst:
einen Bolzen (46), der den Stator (42) an dem Kurbel-Gehäuse (14) fixiert, wobei der Sitz (60) eine Bolzen-Einsetz-Anschluss (604 bis 606) beinhaltet, durch den der Bolzen (46) eingesetzt ist.

8. Der Motor nach Anspruch 7, **dadurch gekennzeichnet, dass** der Sitz (60) den gesamten Umfang des Bolzens (46) umschließt.

9. Der Motor nach einem der Ansprüche 1 bis 8, **dadurch gekennzeichnet, dass** das Kurbel-Gehäuse (14) beinhaltet
ein Wellen-Einsetz-Loch (33, 34), durch das die Kurbel-Welle (15) eingesetzt ist, und einen Vorsprung (56), der in einem Bereich angeordnet ist, der das Wellen-Einsetz-Loch (33, 34) umgibt, und
der Sitz (60) beinhaltet
einen Wellen-Einsetz-Anschluss (61), durch den die Kurbel-Welle (15) eingesetzt ist, und
einen Vorsprung-Einsetz-Anschluss (607), in den der Vorsprung (56) eingesetzt ist, der Vorsprung-Einsetz-Anschluss (607) ist in einem Bereich angeordnet, der den Wellen-Einsetz-Anschluss (61) umgibt.

10. Der Motor nach einem der Ansprüche 1 bis 9, **dadurch gekennzeichnet, dass** das Kurbel-Gehäuse (14) eine Anbringungs-Fläche (53) aufweist, an welcher der Stator (42) angebracht ist.

11. Der Motor nach Anspruch 10, **dadurch gekennzeichnet, dass** das Kurbel-Gehäuse (14) beinhaltet
ein Wellen-Einsetz-Loch (33, 34), durch das die Kurbel-Welle (15) eingesetzt ist, die Anbringungs-Fläche (53) eine flache Form hat, die Anbringungs-Fläche (53) ist um das Wellen-Einsetz-Loch (33, 34) herum angeordnet.

12. Der Motor nach Anspruch 11, **dadurch gekennzeichnet, dass** das Kurbel-Gehäuse (14) einen vorspringenden Abschnitt (55) beinhaltet, der an einer Kante des Wellen-Einsetz-Lochs (33, 34) positioniert ist, der vorspringende Abschnitt (55) springt von der Anbringungs-Fläche (53) in einer Achs-Richtung der Kurbel-Welle (15) vor,
der Sitz (60) einen Wellen-Einsetz-Anschluss (61) beinhaltet, durch den die Kurbel-Welle (15) eingesetzt ist, und
der vorspringende Abschnitt (55) in den Wellen-Einsetz-Anschluss (61) eingesetzt ist.

13. Der Motor nach einem der Ansprüche 10 bis 12, **dadurch gekennzeichnet, dass** der Sitz (60) zwischen dem Stator (42) und der Anbringungs-Fläche (53) angeordnet ist, während er durch den Stator (42) und die Anbringungs-Fläche (53) gepresst ist.

14. Ein Spreiz-Sitz-Fahrzeug, in das ein Motor (8) nach einem der Ansprüche 1 bis 13 eingebaut ist.

## Revendications

1. Moteur comprenant :
un carter (14) ;
un vilebrequin (15) comprenant une première portion d'axe (151) et une deuxième portion d'axe (152), la première portion d'axe (151) étant disposée à l'intérieur du carter (14), la deuxième portion d'axe (152) ressortant du carter (14) ;
un générateur électrique (40) comprenant un rotor (41) et un stator (42), le rotor (41) étant fixé à la deuxième portion d'axe (152), le stator (42) étant fixé au carter (14), le stator (42) comportant un trou à travers lequel la deuxième portion d'axe (152) est insérée ; et
un siège (60) disposé entre le carter (14) et le stator (42), dans lequel
le siège (60) est interposé entre le carter (14) et le stator (42) tout en étant comprimé par le carter (14) et le stator (42), et
le carter (14) est rempli d'huile de lubrification pour lubrifier le vilebrequin (15), le moteur comprenant en outre :
un élément d'étanchéité (35, 36) disposé entre la deuxième portion d'axe (152) et le carter (14) pour sceller l'huile de lubrification dans le carter (14), et
le siège (60) étant constitué au moins en partie d'un matériau élastique.

2. Moteur selon la revendication 1, **caractérisé en ce que** le stator (42) est fixé au carter (14) via le siège (60).

3. Moteur selon la revendication 1 ou 2, **caractérisé en ce que** le siège (60) comprend une couche de base (63) et une couche de revêtement (64, 65), la couche de base (63) étant constituée de métal, la couche de revêtement (64, 65) étant constituée du matériau élastique, la couche de revêtement (64, 65) revêtant la couche de base (63).

4. Moteur selon l'une quelconque des revendications 1 à 3, **caractérisé en ce que** le carter (14) comprend
un corps de boîtier (25) comprenant une ouverture (29), et
un couvercle (26) pourvu séparément du corps de boîtier (25), le couvercle (26) étant attaché à l'ouverture (29),
le stator (42) est attaché au couvercle (26), et
le siège (60) est interposé entre le stator (42) et le couvercle (26) tout en étant comprimé par le stator (42) et le couvercle (26).

5. Moteur selon la revendication 4, **caractérisé en ce que** le couvercle (26) comprend
un corps de couvercle (51) attaché au corps de boîtier (25) de manière à bloquer l'ouverture (29), et
une portion d'attachement (52) à laquelle le stator (42) est attaché, la portion d'attachement (52) comprenant un trou d'insertion d'axe (33, 34) à travers lequel le vilebrequin (15) est inséré, et
le corps de couvercle (51) présente une forme de dôme.

6. Moteur selon l'une quelconque des revendications 1 à 5, **caractérisé en ce que** le générateur électrique (40) est un démarreur-générateur.

7. Moteur selon l'une quelconque des revendications 1 à 6, comprenant en outre :
un boulon (46) qui fixe le stator (42) au carter (14), dans lequel
le siège (60) comprend un port d'insertion de boulon (604 à 606) à travers lequel le boulon (46) est inséré.

8. Moteur selon la revendication 7, **caractérisé en ce que** le siège (60) inclut toute la circonférence du boulon (46).

9. Moteur selon l'une quelconque des revendications 1 à 8, **caractérisé en ce que** le carter (14) comprend
un trou d'insertion d'axe (33, 34) à travers lequel le vilebrequin (15) est inséré, et
une projection (56) disposée dans une région entourant le trou d'insertion d'axe (33, 34), et
le siège (60) comprend
un port d'insertion d'axe (61) à travers lequel le vilebrequin (15) est inséré, et
un port d'insertion de projection (607) dans lequel la projection (56) est insérée, le port d'insertion de projection (607) étant disposé dans une région qui entoure le port d'insertion d'axe (61).

10. Moteur selon l'une quelconque des revendications 1 à 9, **caractérisé en ce que** le carter (14) comprend une surface d'attachement (53) à laquelle le stator (42) est attaché.

11. Moteur selon la revendication 10, **caractérisé en ce que** le carter (14) comprend un trou d'insertion d'axe (33, 34) à travers lequel le vilebrequin (15) est inséré, la surface d'attachement (53) présentant une forme plane, la surface d'attachement (53) étant disposée autour du trou d'insertion d'axe (33, 34).

12. Moteur selon la revendication 11, **caractérisé en ce que**
le carter (14) comprend une portion saillante (55) disposée sur un bord du trou d'insertion d'axe (33, 34), la portion saillante (55) ressortant de la surface d'attachement (53) dans une direction axiale du vilebrequin (15),
le siège (60) comprend un port d'insertion d'axe (61) à travers lequel le vilebrequin (15) est inséré, et
la portion saillante (55) est insérée dans le port d'insertion d'axe (61).

13. Moteur selon l'une quelconque des revendications 10 à 12, **caractérisé en ce que** le siège (60) est interposé entre le stator (42) et la surface d'attachement (53) tout en étant comprimé par le stator (42) et la surface d'attachement (53).

14. Véhicule à enfourcher dans lequel un moteur (8) selon l'une quelconque des revendications 1 à 13 est installé.
